# EUROPEAN PATENT APPLICATION

(11) **EP 4 024 684 A1**
(43) Date of publication of application: **06.07.2022**
(21) Application number: 20930410.4
(22) Date of filing: 30.12.2020
(51) Int. Cl.: H02K 15/06

(54) **POSITIONING AND GUIDING DEVICE FOR INSERTING FLAT WIRE HAIRPINS INTO STATOR**

(30) Priority: 10.04.2020 CN 202010281240
(71) Applicant: Jee Technology Co., Ltd., Hefei, Anhui 230051 (CN)
(72) Inventor: LIU, Lei, Hefei, Anhui 230051 (CN); SHI, Aiwen, Hefei, Anhui 230051 (CN); WU, Yang, Hefei, Anhui 230051 (CN); MU, Junhong, Hefei, Anhui 230051 (CN)
(74) Representative: Osterhoff, Utz
(86) International application number: PCT/CN2020/141450
(87) International publication number: WO 2021/203756

(57) **Abstract**

Disclosed is a positioning guide device for inserting a flat wire hairpin (80) into a stator, including a fixing bracket, a front guide device (40) and a rear positioning device (50). The front guide device (40) includes a driving mechanism, a rotating plate (6), a sliding block plate (14), a plurality of first sliding blocks (17) extendable and retractable along a radial direction of the sliding block plate, and a guide movable piece (13) fixed at a front end of the first sliding block (17). The guide movable piece (13) has a guide groove (131) to prevent a flat wire hairpin (80) from being directly pressed against a front end of an insulating paper (121). The rear positioning device (50) includes the driving mechanism, the rotating plate (6), the sliding block plate (14), a plurality of second sliding blocks (20) extendable and retractable along a radial direction of the sliding block plate (14). A front end of the second sliding block (20) has a first opening slot (201) and a second opening slot (202), the first opening slot (201) and the second opening slot (202) form a shoulder (203) to restrict an axial movement of the insulating paper (121) while allowing the flat wire hairpin (80) to pass through. The positioning guide device can accurately position the flat wire hairpin (80) in the radial and circumferential directions of the stator, which can avoid directly pressing the insulating paper (121) on the flat wire hairpin (80) during the insertion process, and guide the flat wire into the stator slot while effectively protecting the insulating paper (121) to ensure the accuracy of the wire insertion.

## Description

### TECHNICAL FIELD

The present disclosure relates to the technical field of flat wire motor equipment, in particular to a positioning guide device for inserting a flat wire hairpin into a stator.

### BACKGROUND

With the vigorous development of new energy vehicles, the demand for motors is increasing, and the excellent performance of the motor determines the performance of new energy vehicles. The traditional round copper wire motor stator winding is popular for a time due to its convenient assembly, but with the development of higher requirements for the motor, a motor with smaller size, stronger function and faster running speed is required. Compared with ordinary windings with the same volume, flat wire windings have the characteristics of light weight, high efficiency and low noise under high voltage. From a technical point of view, under the same size, a larger current can be passed, a higher frequency can be adapted, and a higher quality factor can be obtained. However, due to the difficulty of assembly, the flat wire winding is not widely used.

The flat copper wire motor can greatly increase the full rate of the motor slot, thereby improving the performance of the motor. Therefore, the flat copper wires are also increasingly used in the field of motors. However, if the installation and processing of the flat copper wire cannot meet the requirements of the motor or the processing accuracy is not high and the processing difficulty is high, the production efficiency of the motor will also be reduced. The low precision will greatly reduce the efficiency of the subsequent use of the motor. Therefore, for the flat copper wire motor, the effect of the installation and processing of the flat copper wire directly affects the performance of the motor.

In the related art, manual wire insertion is often used to protect the insulating paper, which leads to low production efficiency. At the same time, during the manual wire insertion process, the insulating paper moves in the stator slot, thus the ends of the insulating paper are not neat. Therefore, it needs to develop a plug-in device that can protect the insulating paper, which can not only improve production efficiency, but also meet the requirements of assembly accuracy.

### SUMMARY

In order to overcome the defects of the prior art, the purpose of the present disclosure is to provide a positioning guide device for inserting a flat wire hairpin into a stator, which guides the flat wire hairpin into the slot of the stator core while effectively protecting the insulating paper.

For this purpose, the present disclosure provides a positioning guide device for inserting a flat wire hairpin into a stator, including a fixing bracket, a front guide device and a rear positioning device, the front guide device includes a driving mechanism, a rotating plate, a sliding block plate, a plurality of first sliding blocks extendable and retractable along a radial direction of the sliding block plate, and a guide movable piece fixed at a front end of the first sliding block, the guide movable piece has a guide groove to prevent a flat wire hairpin from being directly pressed against a front end of an insulating paper, the rear positioning device includes the driving mechanism, the rotating plate, the sliding block plate, a plurality of second sliding blocks extendable and retractable along a radial direction of the sliding block plate, a front end of the second sliding block has a first opening slot and a second opening slot, the first opening slot and the second opening slot form a shoulder to restrict an axial movement of the insulating paper while allowing the flat wire hairpin to pass through.

Further, the guide movable piece also has a guide block for limiting the flat wire hairpin in a radial direction.

Further, front ends of the guide groove and the guide block are provided with chamfers with a guiding function.

Further, the sliding block plate is provided with a plurality of straight grooves extending in a radial direction, the first sliding block is provided in the straight groove, the rotating plate is provided with a plurality of arc-shaped track grooves, the first sliding block is provided with a sliding pin, the sliding pin is extended into the arc-shaped track groove, and the driving mechanism is connected with the rotating plate and configured to drive the rotating plate to rotate, thereby driving the sliding block to move linearly.

Further, the driving mechanism includes a cylinder, a connecting plate, a cylinder fixing plate, and a joint, the connecting plate is connected with a circumferential side surface of the rotating plate, and the connecting plate is hinged with the cylinder through the joint.

Further, the front guide device is provided with a positioning plate, and the rear positioning device is provided with a positioning arc-shaped piece for axial positioning and central positioning of a stator core.

Further, the stator core is inserted from a side of the rear positioning device, and the flat wire hairpin is inserted from a side of the front guide device.

Further, the fixing bracket includes an installation bottom plate, a left upright column, a right upright column, and two U-shaped brackets.

Further, the installation bottom plate is provided with a right anti-rotation key matched with a positioning groove on the stator core.

Further, the front guide device is connected with the rear positioning device through a plurality of connecting columns.

Compared with the prior arts, the present disclosure has the following beneficial effects.
1. The front guide device with the sliding guide piece and the first sliding block is provided on the front end of the stator core, which can accurately position the flat wire hairpin in the radial and circumferential directions of the stator, avoid the flat wire hairpin being directly pressed to the end of the insulating paper during the insertion process, and prevent the insulating paper from being squeezed and deformed, which can guide the flat wire into the slot of the stator core while effectively protecting the insulating paper to ensure the accuracy of the wire insertion. The rear positioning device with the second sliding block is provided at the rear end of the stator core, which can ensure that neither the insulating paper nor the stator core will move during the wire insertion process.
2. The positioning plate, the positioning arc-shaped piece and the right anti-rotation key are provided, such that it is possible to realize the axial positioning and circumferential positioning of the stator core, and prevent the stator core from moving axially during the wire insertion process. A driving mechanism including a cylinder, a rotating plate, and a sliding pin is provided, such that the first sliding block, the second sliding block and the guide movable piece can be simultaneously expanded and contracted along the radial direction of the circle, which can ensure that the position of the insulating paper does not move and does not affect the wire insertion process.

In addition to the objects, features and advantages described above, the present disclosure has other objects, features and advantages. The present disclosure will be described in further detail below with reference to the drawings.

### BRIEF DESCRIPTION OF THE DRAWINGS

The accompanying drawings forming a part of the present disclosure are used to provide further understanding of the present disclosure, and the exemplary embodiments of the present disclosure and their descriptions are used to explain the present disclosure and do not constitute an improper limitation of the present disclosure.
FIG. 1 is a three-dimensional schematic structural view of a positioning guide device of the present disclosure.
FIG. 2 is a schematic top view of the positioning guide device of the present disclosure.
FIG. 3 is a cross-sectional view of the positioning guide device of the present disclosure after being loaded into a stator core.
FIG. 4 is a schematic structural view of a front guide device in the positioning guide device of the present disclosure.
FIG. 5 is a schematic structural view of the front guide device in the positioning guide device of the present disclosure after a front cover is removed.
FIG. 6 is a schematic structural view of the front guide device in the positioning guide device of the present disclosure after the front cover and a rotating plate are removed.
FIG. 7 is a schematic structural view of a guide movable piece in the positioning guide device of the present disclosure.
FIG. 8 is a schematic diagram 1 of the guide movable piece guiding a flat wire hairpin in the positioning guide device of the present disclosure.
FIG. 9 is a schematic diagram 2 of the guide movable piece guiding the flat wire hairpin in the positioning guide device of the present disclosure.
FIG. 10 is a schematic structural view of a second sliding block in the positioning guide device of the present disclosure.

### Description of reference signs

1 installation bottom plate; 2 left upright column; 3 right upright column; 4 cylinder; 5 cylinder fixing plate; 6 rotating plate; 7 U-shaped bracket; 8 connecting column; 9 right anti-rotation key; 10 positioning plate; 11 positioning arc-shaped piece; 12 stator core; 13 guide movable piece; 14 sliding block plate; 15 connecting plate; 16 front cover; 17 first sliding block; 18 joint; 19 sliding pin; 20 second sliding block; 40 front guide device; 50 rear positioning device; 61 arc-shaped track groove; 80 flat wire hairpin; 121 insulating paper; 131 guide groove; 132 guide block; 201 first opening slot; 202 second opening slot; 203 shoulder

### DETAILED DESCRIPTION OF THE EMBODIMENTS

It should be noted that the embodiments in the present disclosure and the features of the embodiments can be combined with each other in the case of no conflict. The present disclosure will be described in detail below with reference to the accompanying drawings and in conjunction with the embodiments.

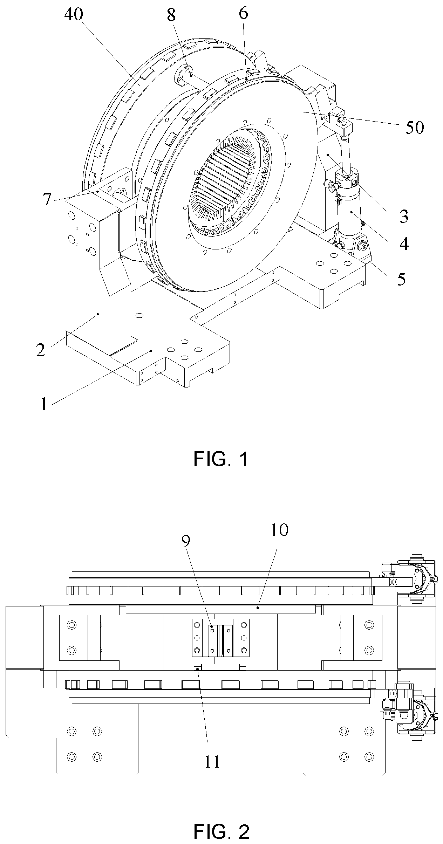

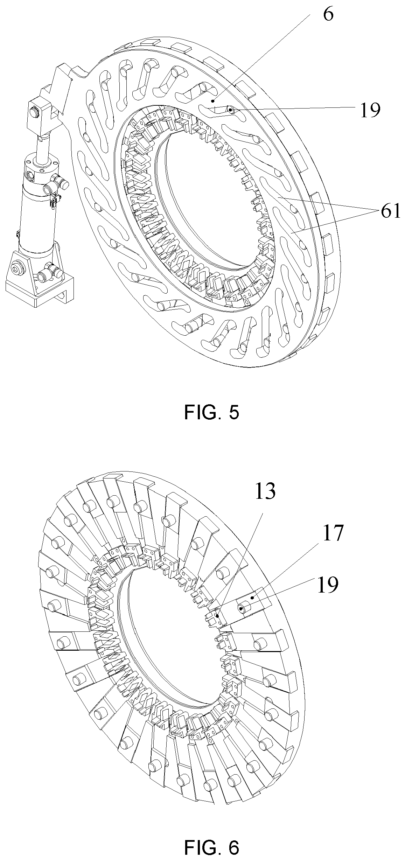

FIG. 1 to FIG. 10 show some embodiments of the present disclosure.

As shown in FIG. 1 to FIG. 4, a positioning guide device for inserting a flat wire hairpin into a stator includes an installation bottom plate 1, a front guide device 40, a rear positioning device 50, and a fixing bracket. The front guide device 40 and the rear positioning device 50 are installed on the fixing bracket, and the front guide device 40 and the rear positioning device 50 are connected together through a connecting column 8 to form a positioning structure of the stator core for fixing a stator core 12.

Both the front guide device 40 and the rear positioning device 50 are structures in which a plurality of sliding blocks are extendable and retractable simultaneously along the radial direction of the circle, and the extension and retraction of the sliding blocks is controlled by a driving mechanism. The front guide device 40 includes a driving mechanism, a rotating plate 6, a sliding block plate 14, a front cover 16, a first sliding block 17, and a guide movable piece 13 fixed on the first sliding block 17.

The driving mechanism is configured to drive the rotating plate 6 to rotate on a front side of the sliding block plate 14. During the rotation of the rotating plate 6, the first sliding block 17 is driven to slide radially in the sliding block plate 14, then, the guide movable piece 13 is driven to move to the axial end of the stator core 12, so that the guide groove on the guide movable piece 13 is aligned with the slot on the stator core 12. Since the guide movable piece 13 has a guide groove, the guide groove plays a guiding role in the process of inserting the flat wire hairpin into the stator core.

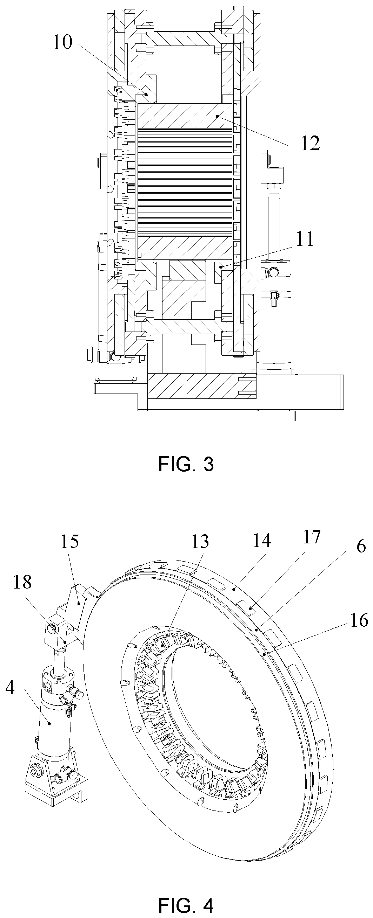

Specifically, as shown in FIG. 4 to FIG. 6, the sliding block plate 14, the rotating plate 6 and the front cover 16 are all hollow annular plates, which are connected in sequence and kept coaxial, and the rotating plate 6 can rotate between the sliding block plate 14 and the front cover 16.

The sliding block plate 14 is provided with a plurality of straight grooves extending in a radial direction. The plurality of straight grooves are distributed in a circular array on the sliding block plate 14, and the first sliding block 17 is installed in the straight groove on the sliding block plate 14 and can slide along the straight groove. The rotating plate 6 is provided with a plurality of arc-shaped track grooves 61. A sliding pin 19 is fixedly installed on the side of the first sliding block 17 close to the side of the rotating plate 6, and the sliding pin 19 extends into the arc-shaped track groove 61.

The arc-shaped track groove 61 extends along the combined direction of the circumferential direction and the radial direction of the rotating plate 6 to form an inclined arc-shaped track. When the driving mechanism drives the rotating plate 6 to rotate, the position of the arc-shaped track groove 61 changes with the rotating plate 6. Since the sliding pin 19 is restricted by the arc-shaped track groove 61, the first sliding block 17 is restricted by the straight groove in the sliding block plate 14, such that the sliding pin 19 can drive the first sliding block 17 to move in the straight groove in the sliding block plate 14, thereby the guide movable piece 13 at the front end of the sliding block 17 moves toward the central axis direction of the stator core, and moves to the front side of one axial end of the stator core to realize the guiding function.

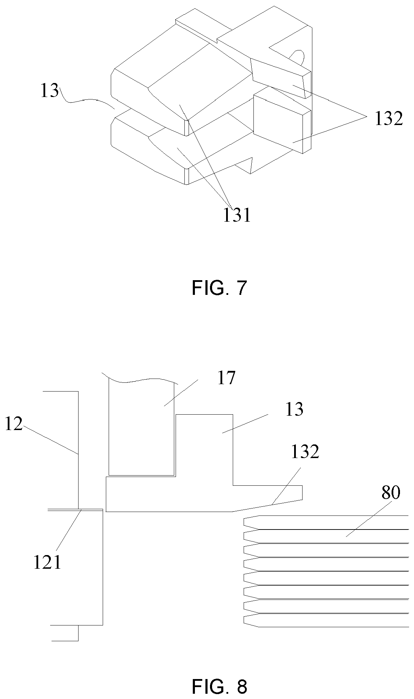

As shown in FIG. 7 to FIG. 9, the guide movable piece 13 has a guide block and a guide groove, a front end of the guide groove has a first chamfer, and a front end of the guide block has a second chamfer. The inner surface of the stator core slot is provided with insulating paper, the circumferential width L1 of the insulating paper is slightly larger than the width L2 of the guide groove, and the width L2 of the guide groove is greater than the width L3 of the flat wire hairpin.

When the flat wire hairpin 80 is inserted into the stator core slot along the axis, the flat wire hairpin first passes through the guide movable piece 13. The guide groove 131 limits the position of the flat wire hairpin 80 in the circumferential direction, and the guide block 132 limits the position of the flat wire hairpin 80 in the radial direction. Since the width L2 of the guide groove is smaller than the circumferential width L1 of the insulating paper, the flat wire will not be directly pressed against the front end of the insulating paper during the insertion process, so as to avoid damage to the insulating paper 121 during the insertion process.

Specifically, the structure of the rear positioning device 50 is similar to that of the front guide device 40. The rear positioning device 50 includes the rotating plate 6, the sliding block plate 14, the front cover 16 with the same structure as the front guide device, and also includes a second sliding block 20 similar to the first sliding block 17. A front end of the second sliding block 20 of the rear positioning device 50 is not provided with the guide movable piece 13, so the flat wire hairpin 80 cannot be guided.

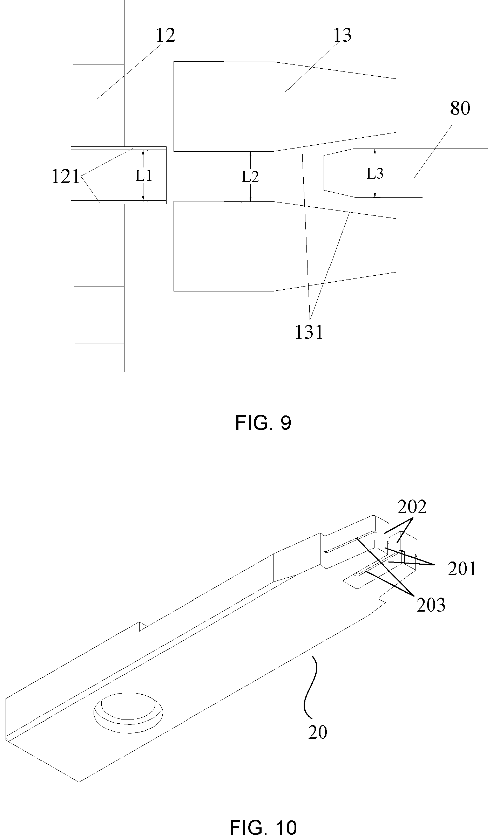

As shown in FIG. 10, a front end of the second sliding block 20 includes a first opening slot 201 and a second opening slot 202. The size of the first opening slot 201 is slightly larger than the size of the insulating paper 121. The circumferential width of the insulating paper 121 is smaller than the width of the first opening slot 201 and greater than the width of the second opening slot 202. The width of the second opening slot 202 is greater than the width of the flat wire hairpin 80. Since the width of the first opening groove 201 is not equal to the width of the second opening groove 202, a shoulder 203 is formed. During the wire insertion process, the end of the insulating paper 121 is located in the first opening slot 201, and the shoulder 203 can prevent the insulating paper 121 from moving in the axial direction. Therefore, the second sliding block 20 can protect the axial movement of the insulating paper without affecting the passing of the flat wire.

In an embodiment, as shown in FIG. 3, a positioning plate 10 is fixed on the front guide device 40. A positioning arc-shaped piece 11 is fixed on the rear positioning device 50. The positioning plate 10 and the positioning arc-shaped piece 11 form a center positioning. The positioning plate 10 and the sliding block after the rear guide device are extended are axially positioned for the axial positioning and center positioning of the stator core 12, and the reason for making it as a separate body is to facilitate repair and adjustment. In addition, a right anti-rotation key 9 is installed on the installation bottom plate 1, and the right anti-rotation key 9 is matched with the positioning groove on the stator core to prevent the stator core from rotating in the circumferential direction.

In an embodiment, as shown in FIG. 1 and FIG. 4, the driving mechanism includes a cylinder 4, a connecting plate 15, a cylinder fixing plate 5, and a joint 18. A lower end of the cylinder 4 is hinged with the installation bottom plate 1 in the fixing bracket through the cylinder fixing plate 5, and an upper end of the cylinder 4 is fixedly provided with a joint 18. The connecting plate 15 is connected to one side of the rotating plate 6 in the circumferential direction, and the connecting plate 15 is hinged with the joint 18, so that the linear motion of the cylinder 4 can be converted into the rotation of the rotating plate 6.

In an embodiment, as shown in FIG. 1 and FIG. 3, the fixing bracket includes an installation bottom plate 1, a left upright column 2, a right upright column 3, and two U-shaped brackets 7. The left upright column 2 and the right upright column 3 are installed on the left and right sides of the installation bottom plate 1 along the vertical direction. The two U-shaped brackets 7 are installed between the left upright column 2 and the right upright column 3, and are fixedly connected to the left upright column 2 and the right upright column 3. The front guide device 40 and the rear positioning device 50 are respectively fixed and installed in the U-shaped bracket 7, and the installation and fixing of the front guide device 40 and the rear positioning device 50 are realized by the fixing bracket.

In an embodiment, as shown in FIG. 1 and FIG. 3, the front guide device 40 and the rear positioning device 50 are connected together by four connecting columns 8 in the up, down, left and right directions, so as to ensure that the center of the front guide device and the center of the rear positioning device are coincident.

The working process of the positioning guide device for inserting the flat wire hairpin into the stator of the present disclosure is as follows:
Firstly, the cylinder 4 controls the rotating plate 6 to rotate, so that the first sliding block 17 in the front guide device 40 and the second sliding block 20 in the rear positioning device 50 are both retracted outwards. The manual or automated equipment pushes the stator core 12 from the rear positioning device 50 into the positioning tool, and fix the stator core 12 through the positioning plate 10 on the front guide device 40, the positioning arc-shaped piece 11 on the rear positioning device 50, and the right anti-rotation key 9.

Then, the cylinder 4 controls the rotating plate 6 to rotate, so that the first sliding block 17 in the front guide device 40 and the second sliding block 20 in the rear positioning device 50 are both protruded inwards.

After the flat wire hairpin is ready, the flat wire hairpin is manually or mechanically inserted from the side of the front guide device 40.

During the process of inserting the flat wire hairpin, the front end of the flat wire enters the slot of the stator core 12 through the guidance of the first sliding block 17. When the flat wire hairpin moves, it first passes through the guide movable piece 13, the guide groove 131 limits the flat wire hairpin 80 in the circumferential direction, and the guide block 132 limits the flat wire hairpin 80 in the radial direction. Since the width L2 of the guide groove is smaller than the circumferential direction L1 of the insulating paper, it is possible to accurately position the flat wire hairpin radially in the radial and circumferential directions of the stator, avoid directly pressing the end of the insulating paper during the process of inserting the flat wire hairpin, and avoid damaging the insulating paper 121 during the insertion process.

After all the front ends of the flat wire hairpins are inserted into the slots of the stator core 12, the rotating plate 6 is controlled to rotate through the cylinder 4, so that the first sliding block 17 in the front guide device 40 is retracted, and the flat wire hairpins 80 continue to be inserted in place.

During the process of inserting the flat wire hairpin, the second sliding block 20 in the rear positioning device 50 is in the extended state, such that the end of the insulating paper 121 is located in the first opening slot 201, and the shoulder 203 is used to prevent the insulating paper 121 from moving in the axial direction and prevent the insulating paper 121 from moving in the axial direction.

After the insertion is completed, the rotation of the rotating plate 6 is controlled by the cylinder 4, so that the second sliding block 20 in the rear positioning device 50 is retracted outwards, and then the stator core is taken out manually or automatically, and the work is completed.

The above descriptions are only preferred embodiments of the present disclosure, and are not intended to limit the present disclosure. For those skilled in the art, the present disclosure may have various modifications and changes. Any modification, equivalent replacement, improvement, etc. made within the spirit and principle of the present disclosure shall be included within the protection scope of the present disclosure.

## Claims

1. A positioning guide device for inserting a flat wire hairpin into a stator, **characterized by** comprising a fixing bracket, a front guide device (40) and a rear positioning device (50), wherein:
the front guide device (40) comprises a driving mechanism, a rotating plate (6), a sliding block plate (14), a plurality of first sliding blocks (17) extendable and retractable along a radial direction of the sliding block plate, and a guide movable piece (13) fixed at a front end of the first sliding block (17), the guide movable piece (13) has a guide groove (131) to prevent a flat wire hairpin (80) from being directly pressed against a front end of an insulating paper (121),
the rear positioning device (50) comprises the driving mechanism, the rotating plate (6), the sliding block plate (14), a plurality of second sliding blocks (20) extendable and retractable along a radial direction of the sliding block plate (14), a front end of the second sliding block (20) has a first opening slot (201) and a second opening slot (202), the first opening slot (201) and the second opening slot (202) form a shoulder (203) to restrict an axial movement of the insulating paper (121) while allowing the flat wire hairpin (80) to pass through.

2. The positioning guide device for inserting the flat wire hairpin into the stator according to claim 1, wherein the guide movable piece (13) also has a guide block (132) for limiting the flat wire hairpin (80) in a radial direction.

3. The positioning guide device for inserting the flat wire hairpin into the stator according to claim 2, wherein front ends of the guide groove (131) and the guide block (132) are provided with chamfers with a guiding function.

4. The positioning guide device for inserting the flat wire hairpin into the stator according to claim 1, wherein the sliding block plate (14) is provided with a plurality of straight grooves extending in a radial direction, the first sliding block (17) is provided in the straight groove, the rotating plate (6) is provided with a plurality of arc-shaped track grooves (61), the first sliding block (17) is provided with a sliding pin (19), the sliding pin (19) is extended into the arc-shaped track groove (61), and the driving mechanism is connected with the rotating plate (6) and configured to drive the rotating plate (6) to rotate, thereby driving the sliding block (17) to move linearly.

5. The positioning guide device for inserting the flat wire hairpin into the stator according to claim 4, wherein the driving mechanism comprises a cylinder (4), a connecting plate (15), a cylinder fixing plate (5), and a joint (18), the connecting plate (15) is connected with a circumferential side surface of the rotating plate (6), and the connecting plate (15) is hinged with the cylinder (4) through the joint (18).

6. The positioning guide device for inserting the flat wire hairpin into the stator according to claim 1, wherein the front guide device (40) is provided with a positioning plate (10), and the rear positioning device (50) is provided with a positioning arc-shaped piece (11) for axial positioning and central positioning of a stator core (12).

7. The positioning guide device for inserting the flat wire hairpin into the stator according to claim 6, wherein the stator core is inserted from a side of the rear positioning device (50), and the flat wire hairpin (80) is inserted from a side of the front guide device (40).

8. The positioning guide device for inserting the flat wire hairpin into the stator according to claim 1, wherein the fixing bracket comprises an installation bottom plate (1), a left upright column (2), a right upright column (3), and two U-shaped brackets (7).

9. The positioning guide device for inserting the flat wire hairpin into the stator according to claim 8, wherein the installation bottom plate (1) is provided with a right anti-rotation key (9) matched with a positioning groove on the stator core (12).

10. The positioning guide device for inserting the flat wire hairpin into the stator according to claim 1, wherein the front guide device (40) is connected with the rear positioning device (50) through a plurality of connecting columns (8).
